# EUROPEAN PATENT SPECIFICATION

(11) **EP 1 619 380 B1**
(45) Date of publication and mention of the grant of the patent: **19.11.2008**
(21) Application number: 04016958.3
(22) Date of filing: 19.07.2004
(51) Int. Cl.: F02M 35/16, F02M 35/02

(54) **Motor-vehicle air cleaner**
Luftfilter für Motorfahrzeug
Filtre à air pour véhicule à moteur

(43) Date of publication of application: 25.01.2006
(73) Proprietor: Kwang Yang Motor Co., Ltd., Kaohsiung City (TW)
(72) Inventor: Su, Hung Yu, 48 Regent Street Cambridge CB2 1FD (GB)
(74) Representative: Horak, Michael

(56) References cited:
- DE-A- 10 200 673
- US-A- 5 558 549
- US-A- 5 918 576
- US-A- 5 921 214
- US-A1- 2002 160 670
- US-B1- 6 290 016
- US-B1- 6 302 752
- US-B1- 6 419 718

## Description

### BACKGROUND OF THE INVENTION

### (a) Technical Field of the Invention

The present invention is related to an air cleaner mounted to a motor vehicle, and more particularly, to one that effectively drains, well ventilated and protects the check value so as to prevent difficult starting of the engine due to excessive water vapor and oil vapor.

### (b) Description of the Prior Art

For any motor vehicle, a motorcycle or an all terrain vehicle (ATV) operates on introducing the fresh air from the ambient to mix up with the fuel, the admixture is imported into the engine to be ignited and exploded to produce power to further push pistons to engage in reciprocal motion, which in turn is transmitted through the belt to drive the gearbox for the vehicle to advance. As the engine keeps running by depending on the introduction of proper amount of air into the engine, the air carries at the same time water vapor, foreign matters and dust, which when admitted into the engine will damage the engine and air inlet mechanical parts. Furthermore, excessive amount of air vapor will cause difficult start of the engine. To avoid the ingress of air vapor, foreign matters and dust from damaging the engine and air inlet mechanism, an air cleaner is provided in front of the carburetor of the air inlet mechanism in case of a conventional engine to the vehicle or in front of the throttle valve in case of an injection engine to make sure that only the clean air is admitted to maintain the engine in normal working condition.

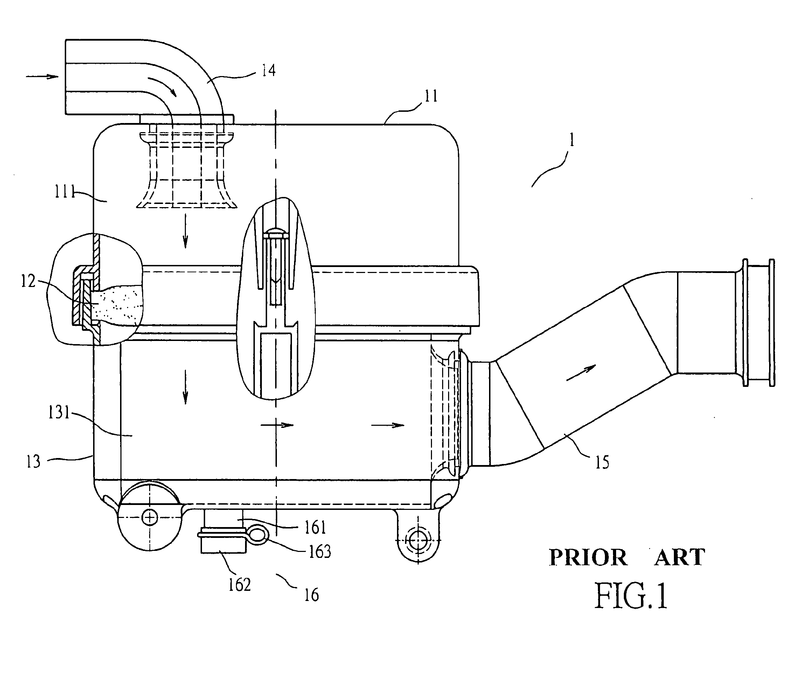

As illustrated in Fig. 1 of the accompanying drawings, an air cleaner 1 of the prior art is comprised of an upper cap 11, an in-flow chamber 111 defined by the upper cap 11, a filter element 12, a lower cap 13 and a outflow chamber 131 defined by the lower cap 13. Wherein, an air intake passage 14 is disposed into the inflow chamber 111; the filter element 12 usually relates to a filtration cotton; an air outtake passage 14 connected to the carburetor or the throttle valve (not illustrated) is provided to the outflow chamber; a drainage 16 is disposed at where below the outflow chamber 131; the drainage 16 is provided with a pipe 161 extending into where below the body of the vehicle; a jacket 162 provided at the outlet of the pipe 161 to block the pipe 161 and is secured to the drainage 16 by means of a clamping device 163.

Once the engine is running, a large volume of air enters through the air intake passage 14 into the inflow chamber 111 and is filtered into clean air by the filter element 12 before being admitted to the outflow chamber, and then into the carburetor or the throttle valve via the outtake passage 15. The air is mixed with fuel at a proper ratio to form the admixture for combustion in the cylinder to generate power for keeping the engine running. However, the ambient air usually carries water vapor, foreign matters and dust. Foreign matters and dust may pass through the filter element while the water vapor may condense into water drops to log inside the outflow chamber 131. When the water logging is observed in the pipe, the jacket 162 is removed to drain out the water. Nonetheless, the drainage mechanism is provided with only the drain function, it takes constant attention by the user to watch for any water logging inside the air cleaner for drainage in time. Excessive logging of air vapor and fuel vapor will kill the engine particularly when riding or driving for a long distance on a sand beach or a creek bed, and it is very difficult to get the engine to start again.

DE 102 00 673A discloses a motor vehicle air cleaner with a drain valve. US 5 918 576 A discloses an air cleaner and intake arrangement wherein the air cleaner includes an inlet which does not face in the direction of vehicle travel and which is generally shielded from direct air flow variations, a first section for removing air-borne water, and a second section having a filter for removing particulate matter, and air circulates around the filter, distributing the filtering load across the entire filter. However, neither DE 102 00 673A or US 5 918 576 A can effectively prevent excessive logging of water vapor and fuel vapor in the air cleaner.

### SUMMARY OF THE INVENTION

The primary purpose of the present invention is to provide a motor vehicle that allows easy starting of the engine by effectively preventing excessive logging of water vapor and fuel vapor in the air cleaner. To achieve this purpose, a check valve mechanism is provided to the lower cap of the air cleaner and a protection is provided to the check valve mechanism to keep off water and dust.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

Fig. 1 is a schematic view of an air cleaner of the prior art.
Fig. 2 is a schematic view showing an assembly of an air cleaner of a preferred embodiment of the present invention.
Fig. 3 is an exploded view of a drainage mechanism of the preferred embodiment of the present invention.
Fig. 4 is a sectional view showing that the drainage mechanism is in closed status.
Fig. 5 is a sectional view showing that the drainage mechanism is in open status.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

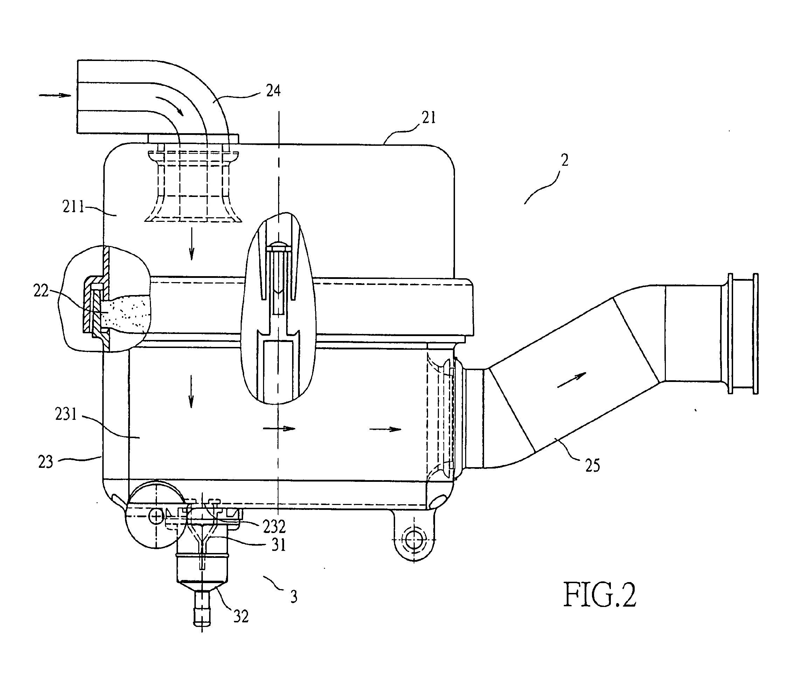

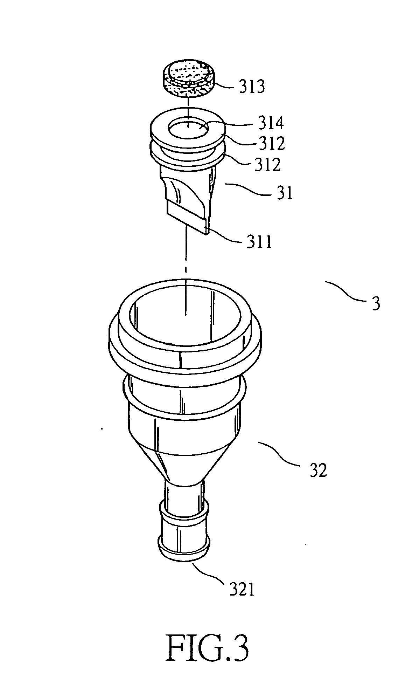

Referring to Fig. 2, an air cleaner 2 of the present invention is comprised of an upper cap 21, an inflow chamber 211 defined by the cap 21, an filter element 22, a lower cap 23, an outflow chamber 231 defined by the lower cap 23, and a drainage mechanism 3. Wherein, an air intake passage 24 is provided in the inflow chamber 211; the filter element 22 is made of filtration cotton; and an air outtake passage 25 connected to a carburetor or a throttle valve is provided to the outflow chamber 231. A drainage mechanism 3 provided to the lower cap 23 as illustrated in Fig. 3 is comprised of a check valve mechanism 31 and a protection member 32. The check valve mechanism 31 is a hollow member made of rubber and is provided with two flanges 312 at its top to be engaged with an outlet 232 disposed at the lower cap 23. The check valve mechanism 31 reduces at its lower end to form a slim and flushed drain 311. Meanwhile, another filter element 313 is disposed in an accommodation chamber 314 provided at where above the check valve mechanism 31. The protection member 32 is a funnel member to fully cover up the check valve mechanism 31 while a ventilation port 321 is disposed at the lower end of the protection member 32.

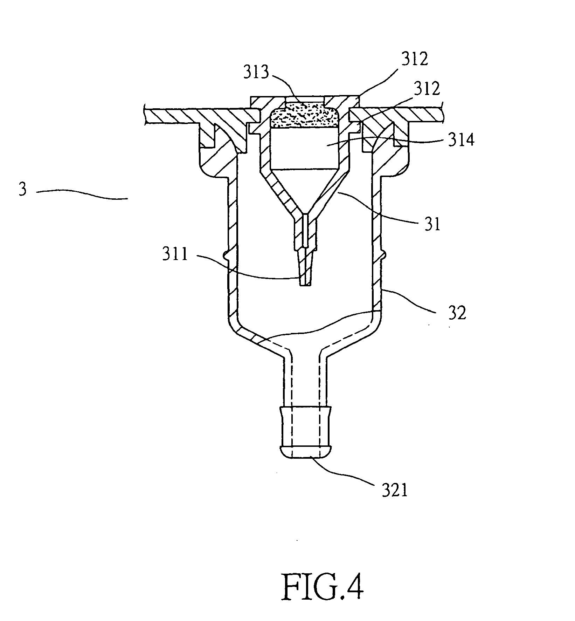

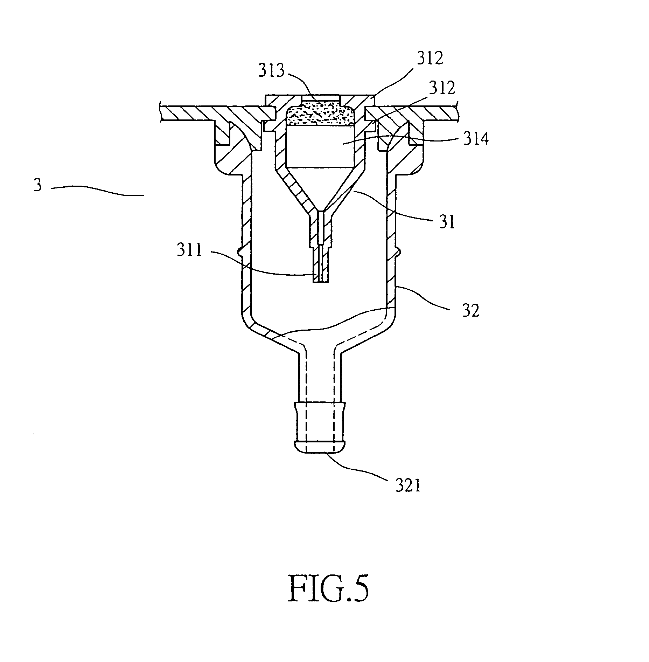

Once the engine is running, the air required in the combustion chamber of the engine is introduced through the intake passage 24 of the air cleaner 2, filtered by the filter element 22 before being admitted to the carburetor or the throttle valve through the air outtake passage 25, and further into the engine. As the engine runs, the outflow chamber 231 is in a negative pressure status to create a suction force to close up the rubber made drain 311 of the check valve mechanism 31 provided at the outlet 232 at the lower cap 23 as illustrated in Fig. 4 to prevent the water vapor and dust from being sucked into the air cleaner 2 through the drain 311. As the engine stops, the pressure inside the outflow chamber 231 is equivalent to that of the ambient to leave the drain 311 of the check valve mechanism 31 open as illustrated in Fig. 5 to achieve its purpose of drainage and ventilation. Water logging and excessively dense fuel vapor are discharged through the drain 311 into the protection 32, and further into the ambient through the ventilation port 321 of the protection 32. The filter element 313 provided inside the chamber 314 above the check valve mechanism 31 filters once again to prevent foreign matters and dust to escape into the air cleaner 2 through the drain 311. The protection 32 prevents the check valve mechanism 31 from direct contact with the ambient, and the check valve mechanism 31 is well guarded by the protection 32 for extended service life for the air cleaner to faithfully perform its functions of drain and ventilation. For being free of the excessive water vapor and fuel vapor, an easy start of the engine is secured and the check valve mechanism achieves its purposes of stopping the ingress of water and dust.

The present invention by providing a check valve mechanism and a protection improves the flaws of failure in automatic drain and ventilation as found in the air cleaner of the prior art; while the protection helps extend the service life of the check valve mechanism.

## Claims

1. A motor vehicle air cleaner (2) comprising: an upper cap (21) having an inflow chamber (211), said inflow chamber (211) being provided with an air intake passage (24); a lower cap (23) having an outflow chamber (231); a first filter element (22) arranged between said inflow chamber (211) of said upper cap (21) and said outflow chamber (231) of said lower cap (23), said outflow chamber (231) having an outtake passage (25); and a drainage mechanism (3) provided to a bottom of said lower cap (21), **characterized in that** said drainage mechanism (3) having a funnel member and a check valve mechanism (31) fitted into said funnel member, said check valve mechanism (31) being a hollow member made of rubber and having a top end provided with two flanges (312) engaged with an outlet (232) of said lower cap (23), said check valve mechanism (31) having a lower end which reduces into a slim and flushed drain (311), a second filter element (313) fitted in said check valve mechanism (31), said funnel member having a lower end provided with a ventilation port (321) to connect through the ambient air; whereby when in operation, said outflow chamber (231) is in a negative pressure status to create a suction force to close up said drain (311) thereby preventing water vapor or dust from being sucked into said outflow chamber (231) through said drain (311), and when not in operation, pressure inside said outflow chamber (231) is equal to ambient pressure to leave said drain (311) open thereby enabling water and vapor to be discharged into said funnel member.

## Patentansprüche

1. Ein Luftfilter (2) für ein Kraftfahrzeug mit einer oberen Kappe (21), die ihrerseits eine Einlaßkammer (211) mit einem Lufteinlaß (24) hat, sowie eine untere Kappe (23) mit einer Auslaßkammer (231), ein erstes Filterelement (22) zwischen der Einlaßkammer (211) der oberen Kappe (21) und der Auslaßkammer (231) der unteren Kappe (23), wobei die Auslaßkammer (231) eine Auslaßpassage (25) hat, mit einer Drainagevorrichtung (3) am Boden der unteren Kappe (23) und **dadurch gekennzeichnet, daß** besagte Drainagevorrichtung (3) ein trichterförmiges Element und darin untergebracht ein Sperrventil (31) hat, wobei das Sperrventil (31) am oberen Ende aus einem hohlen Gummielement mit zwei Flanschen (312) besteht, welche mit einem Auslaß (232) der unteren Kappe (23) verbunden sind und am unteren Ende in einen schlanken bündigen Abfluß (311) übergeht, wobei sich ein zweites Filterelement (313) in besagtem Sperrventil (31) befindet und das trichterförmige Element am unteren Ende eine Ventilationsöffnung (321) zur Verbindung mit der Umgebungsluft hat, so daß im Betrieb in der Auslaßkammer (231) ein Unterdruck herrscht, um eine Saugwirkung zum Verschluß des Abflusses (311) zu erzeugen, damit das Eindringen von Wasserdampf und Staub durch den Abfluß (311) in die Auslaßkammer (231) verhindert wird und im Ruhezustand der Druck innerhalb der Auslaßkammer (231) gleich dem Umgebungsdruck ist, so daß Wasser und Dampf in das trichterförmige Element abfließen können.

## Revendications

1. Un nettoyeur à air pour véhicule motorisé (2) comprenant: un capuchon supérieur (21) ayant une chambre d'admission (211), ladite chambre d'admisson (211) étant équipée d'un passage d'entrée d'air (24); un capuchon inférieur (23) ayant une chambre de sortie (231); un premier élément de filtre (22) disposé entre ladite chambre d'admission (211) dudit capuchon supérieur (21) et de ladite chambre de sortie (231) dudit capuchon inférieur (23), ladite chambre de sortie (231) ayant un passage de sortie d'air (25); et un mécanisme de drainage (3) installé sur la base dudit capuchon inférieur (23), **caractérisé par** ledit mécanisme de drainage (3) ayant un membre en entonnoir, ledit mécanisme à valve (1) étant un membre creux fabriqué en caoutchouc et ayant une extrémité supérieure équipée de deux boudins (312) engagés avec une sortie (232) dudit capuchon inférieur (23), ledit mécanisme à valve (31) ayant une extrémité inférieure qui se réduit en un écoulement mince et inondé (311), un second élément de filtre (313) installé dans ledit mécanisme à valve (31), ledit membre en entonnoir ayant une extrêmité inférieure équipée avec un port de ventilation (321) pour connecter avec l'air ambiant; durant l'opération, ladite chambre de sortie (231) se trouve dans un état de pression négative pour créer une force de succion et fermer ledit écoulement (311) empêchant la vapeur d'eau ou la poussière d'être aspirée dans ladite chambre de sortie (231) au travers dudit écoulement (311), et lorsque le système n'est pas opéré, la pression dans ladite chambre de sortie (231) est équivalente à la pression ambiante pour laisser ledit écoulement (311) ouvert, permettant à l'eau et à la vapeur de se décharger dans ledit membre en entonnoir.
